(19) Europäisches Patentamt
European Patent Office
Office européen des brevets

(11) **EP 4 283 166 A1**

(12) **EUROPÄISCHE PATENTANMELDUNG**

(43) Veröffentlichungstag:
**29.11.2023   Patentblatt 2023/48**

(21) Anmeldenummer: **22175584.6**

(22) Anmeldetag: **25.05.2022**

(51) Internationale Patentklassifikation (IPC):
**F16H 55/08** (2006.01)    **F16H 55/14** (2006.01)
**F16H 55/18** (2006.01)    **B23F 17/00** (2006.01)

(52) Gemeinsame Patentklassifikation (CPC):
**F16H 55/08; B23F 23/1218; F16H 55/14;
F16H 55/18;** F16H 2055/086

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Klingelnberg AG**
**8050 Zürich (CH)**

(72) Erfinder: **Schalaster, Rolf**
**42929 Wermelskirchen (DE)**

(74) Vertreter: **Janke Scholl Patentanwälte PartG mbB**
**Kaiser-Friedrich-Ring 5**
**40545 Düsseldorf (DE)**

(54) **ZAHNRAD, VERFAHREN ZUR HEHRSTELLUNG EINES ZAHNRADS UND VERFAHREN ZUR MESSUNG EINES ZAHNRADS**

(57)    Zahnrad, wobei das Zahnrad eine Sollgeometrie aufweist, wobei das Zahnrad eine der Sollgeometrie überlagerte Modifikation in Form einer sich von Zahn zu Zahn ändernden Teilung und/oder Topografie aufweist, wobei eine durch die Modifikation vorgegebene Variation der Teilung und/oder Topografie über einer Gesamtzähnezahl des Zahnrads betrachtet einer Überlagerung mindestens zweier harmonischer Funktionen entspricht, die sich in einem Parameter oder in mehreren Parametern, wie ihrer Amplitude, Frequenz oder Phasenverschie- bung, voneinander unterscheiden.

Fig. 1

Fig. 2

EP 4 283 166 A1

**Beschreibung**

Die vorliegende Erfindung betrifft ein Zahnrad, wobei das Zahnrad eine Sollgeometrie aufweist und wobei das Zahnrad eine der Sollgeometrie überlagerte Modifikation in Form einer sich von Zahn zu Zahn ändernden Teilung und/oder Topografie aufweist. Weiter betrifft die Erfindung ein Verfahren zur Herstellung eines Zahnrads sowie ein Verfahren zur Messung eines Zahnrads.

In modernen Kraftfahrzeugen mit rein elektromotorischem Antrieb oder mit Hybridantrieb wird das Getriebegeräusch nicht mehr vollständig bzw. weniger stark durch das Motorgeräusch maskiert, da deren Motoren im Vergleich zu den Motoren rein verbrennungsmotorischer Antriebe, wie konventionelle Diesel- oder Benzinaggregate, geräuschärmer arbeiten. Das Getriebegeräusch kann daher von den Fahrzeuginsassen wahrgenommen und als störend empfunden werden.

Das Geräuschverhalten eines Getriebes wird hauptsächlich durch die Erregung im Zahneingriff der miteinander kämmenden Zahnradpaarungen verursacht. Die eingangs erwähnte, der Sollgeometrie überlagerte Modifikation in Form einer sich von Zahn zu Zahn ändernden Teilung und/oder Topografie bewirkt eine Aufteilung der Zahneingriffsfrequenz und deren Harmonischer auf Nachbarfrequenzen, um das subjektive Geräuschverhalten des Zahnrads im Getriebe zu verbessern.

Ein solcher Ansatz wird z.B. in der Veröffentlichung "Reducing the tonality of gear noise by application of topygraphy scattering for ground bevel gears" beschrieben, erschienen im Magazin "GearSolutions", Ausgabe Mai 2021. Hier wird eine zufällige Modifikation, in Form eines stochastischen Teilungsfehlerverlaufs und stochastischer topografischer Flankenmodifikationen, innerhalb der Grenzen der vorgesehenen Toleranzklasse, auf eine Kegelradverzahnung aufgebracht, um das subjektive Geräuschverhalten der betreffenden Verzahnung zu verbessern.

Das subjektive Geräuschverhalten betrifft dabei die Wahrnehmung von Geräuschen durch den Menschen. So können z.B. zwei Geräusche, die den gleichen Lärmpegel aufweisen, durch den Menschen als unterschiedlich störend wahrgenommen werden, und zwar abhängig davon, aus welchen Frequenzen sich das betreffende Geräusch zusammensetzt und wie dominant diese Frequenzen insgesamt im Vergleich zum Rauschanteil des betreffenden Geräuschs sind. Eine Verbesserung des subjektiven Geräuschverhaltens eines Getriebes wird auch als psychoakustische Optimierung des Getriebegeräuschs bezeichnet. Ziel einer solchen psychoakustischen Optimierung des Getriebegeräuschs ist es, den Rauschanteil des Getriebegeräuschs zu erhöhen und die Tonhaltigkeit eines Getriebegeräuschspektrums zu reduzieren.

Das in dem vorgenannten Artikel aus dem Magazin "GearSolutions" bekannte Vorgehen, zufällig verteilte Modifikationen an einem Zahnrad vorzusehen, hat den Nachteil, dass bei einer Messung der Geometrie eines solchen Zahnrads gegenüber der vorgegebenen, nicht geräuschoptimierten Soll-Geometrie ggf. große Abweichungen erkannt werden, je nachdem, welche Zähne des Zahnrads gemessen worden sind. So ist es üblich, über den Umfang des Zahnrads verteilt lediglich drei oder vier Zähne oder Lücken eines Zahnrads zu messen und aus diesen Messungen gemittelte Abweichungen zu bestimmen, um Korrekturen für den Fertigungsprozess abzuleiten. Die zufällig verteilten Modifikationen können daher dazu führen, dass infolge der Messung weniger Zähne große gemittelte Abweichungen erkannt werden, die für das gesamte Zahnrad nicht repräsentativ sind und nicht korrigiert werden müssen. Das Korrekturverfahren kann daher nicht zuverlässig durchgeführt werden.

Um hier trotz der zufällig verteilten Modifikationen eine sinnvolle Messung zu ermöglichen, müsste für jedes Zahnrad eine Messung aller Zähne bzw. Lücken durchgeführt werden oder, soweit wie üblich nur wenige Zähne gemessen werden, die genaue zahn- bzw. lückenspezifische, geräuschoptimierte Sollgeometrie mit ihrer jeweiligen zahn- bzw. lückenspezifischen Modifikation in einer Messmaschine bereitgestellt werden und eine Messung und Auswertung von Abweichungen zahn- bzw. lückenspezifisch gegenüber dieser zahn- bzw. lückenspezifischen, geräuschoptimierten Sollgeometrie erfolgen. Dieses Vorgehen ist mit einem hohen Aufwand verbunden und nur eingeschränkt praxistauglich.

Vor diesem Hintergrund liegt der vorliegenden Erfindung die technische Problemstellung zugrunde, ein Zahnrad mit einer der Sollgeometrie überlagerten Modifikation in Form einer sich von Zahn zu Zahn ändernden Teilung und/oder Topografie anzugeben, das ein verbessertes subjektives Geräuschverhalten aufweist und dessen Qualität anhand einer Messung gegenüber seiner Soll-Geometrie ohne eine zahn- bzw. lückenspezifische Berücksichtigung der Modifikation geprüft werden kann. Weiter soll ein Verfahren zur Herstellung eines solchen Zahnrads und ein Verfahren zum Messen eines solchen Zahnrads angegeben werden.

Gemäß einem ersten Aspekt betrifft die Erfindung ein Zahnrad, wobei das Zahnrad eine Sollgeometrie aufweist und wobei das Zahnrad eine der Sollgeometrie überlagerte Modifikation in Form einer sich von Zahn zu Zahn ändernden Teilung und/oder Topografie aufweist. Das Zahnrad zeichnet sich dadurch aus, dass eine durch die Modifikation vorgegebene Variation der Teilung und/oder Topografie über einer Gesamtzähnezahl des Zahnrads betrachtet einer Überlagerung mindestens zweier harmonischer Funktionen entspricht, die sich in einem Parameter oder in mehreren Parametern, wie ihrer Amplitude, Frequenz oder Phasenverschiebung, voneinander unterscheiden.

Wenn im vorliegenden Text von der Sollgeometrie gesprochen wird, so handelt es sich dabei um die Sollgeometrie des Zahnrads ohne die der Sollgeometrie überlagerte Modifikation. Wenn im vorliegenden Text von einer geräuschoptimierten Sollgeometrie gesprochen wird, so handelt es sich dabei um die Sollgeometrie des Zahnrads mit der der Sollgeometrie überlagerten Modifikation.

Die erfindungsgemäße Modifikation bewirkt ein verbessertes Geräuschverhalten des Zahnrads, wobei die Qualität des Zahnrads anhand einer Messung gegenüber seiner SollGeometrie ohne eine zahn- bzw. lückenspezifische Berücksichtigung der Modifikation geprüft werden kann. D.h. trotz der der Sollgeometrie überlagerten Modifikation können die Abweichungen des Zahnrads weiterhin gegenüber der Sollgeometrie und nicht gegenüber der geräuschoptimierten Sollgeometrie ermittelt werden, so dass die geräuschoptimierte Sollgeometrie einer Messmaschine nicht zur Verfügung gestellt werden muss.

Durch die Verwendung einer Überlagerung mindestens zweier harmonischer Funktionen, um die Variation vorzugeben, kann erreicht werden, dass eine sich aufgrund der Modifikation ergebende, gemittelte Abweichung beispielsweise gegenüber der Soll-Geometrie weniger als 25 % der Amplitude bzw. Gesamtamplitude der Überlagerung beträgt - und zwar unabhängig davon, welche Zähne oder Lücken des Zahnrads im Zuge einer Betrachtung von z.B. 3 oder 4 Zähnen des Zahnrads ausgewertet werden. Die Streuung der Messergebnisse, die in Abhängigkeit von der Auswahl der gemessenen Zähne oder Lücken entsteht, ist daher sehr gering, so dass beliebige Zähne oder Lücken gemessen und ausgewertet werden können und weiterhin Korrekturparameter für einen Fertigungsprozess anhand dieser gemittelten Abweichungen bestimmt werden können.

Je nach Anzahl der überlagerten Funktionen und derer Frequenzen über der Gesamtzähnezahl betrachtet kann eine Variation erzeugt werden, die einer zufälligen Variation vergleichbar erscheint, soweit lediglich der die Gesamtzähnezahl betreffende Ausschnitt der Überlagerung betrachtet wird.

Es kann vorgesehen sein, dass eine Amplitude bzw. Gesamtamplitude der überlagerten harmonischen Funktionen vorgeben wird, die innerhalb eines vorgegebenen Toleranzbereichs des Zahnrads liegt, wobei die Gesamtamplitude auf die Amplituden der überlagerten harmonischen Funktionen aufgeteilt wird. So kann sichergestellt werden, dass das Zahnrad zuverlässig innerhalb der vorgegebenen Toleranzgrenzen gefertigt werden kann.

Gemäß einer Ausgestaltung des Zahnrads kann vorgesehen sein, dass sich die überlagerten harmonischen Funktionen jeweils sowohl hinsichtlich ihrer Amplitude als auch ihrer Frequenz als auch ihrer Phasenverschiebung voneinander unterscheiden.

Gemäß einer Ausgestaltung des Zahnrads kann vorgesehen sein, dass sich die überlagerten harmonischen Funktionen jeweils hinsichtlich ihrer Frequenz und ihrer Phasenverschiebung voneinander unterscheiden.

Beispielsweise kann vorgesehen sein, dass genau drei harmonische Funktionen überlagert sind.

Wenn vorliegend von harmonischen Funktionen gesprochen wird, so können dies beispielsweise Funktionen sein, mit denen sich harmonische Schwingungen beschreiben lassen, wie Winkelfunktionen oder dergleichen, insbesondere Sinusfunktionen und/oder Cosinusfunktionen.

Insbesondere kann die Modifikation vorgegeben sein, in dem jedem Zahn eine Abweichung als Funktionswert der überlagerten harmonischen Funktionen zugeordnet ist.

Es kann vorgesehen sein, dass die überlagerten harmonischen Funktionen Sinusfunktionen sind, wobei jedem Zahn eine Abweichung als Funktionswert $f(x)$ gemäß der folgenden Vorschrift zugeordnet wird:

$$f(x) = K_{max} * \sum_{i=1}^{n} A_i * \sin\left(2 * \pi * \left(\phi_i + \omega_i \frac{(x-1)}{Z}\right)\right)$$

, wobei $K_{max}$ einer maximalen Abweichung eines Verzahnungsparameters oder eines Prozessparameters entspricht, wobei "i" einem Laufindex entspricht, wobei "n" einer Anzahl der vorgegebenen überlagerten Sinusfunktionen entspricht, wobei die Variable "Z" der Gesamtzähnezahl des Zahnrads entspricht, wobei die Variable "$A_i$" einer vorgegebenen Amplitude einer jeweiligen "i"-ten Sinusfunktion ent-spricht, wobei die Variable "$\phi_i$" einer vorgegebenen Phasenverschiebung einer jeweiligen "i"-ten Sinusfunktion entspricht, wobei die Variable "$\omega_i$" einer vorgegebenen Frequenz einer jeweiligen "i"-ten Sinusfunktion entspricht und wobei die Variable "x" eine natürlichen Zahl mit x= 1 bis x=Z ist, wobei "x" zudem einer Nummer eines betreffenden Zahns aufsteigend von 1 bis Z entspricht und wobei die Zähne im Uhrzeigersinn oder gegen den Uhrzeigersinn aufeinanderfolgend durchnummeriert sind. Die Funktion f(x) definiert daher für jede natürliche Zahl x von x=1 bis einschließlich x=Z eine dem jeweiligen Zahn zuzuordnende Abweichung.

$K_{max}$ kann hierbei z.B. eine Teilungsabweichung, ein Spiralwinkelfehler oder ein anderer die Geometrie eines Zahnrads oder Kegelrads unmittelbar definierender Verzahnungsparameter sein. $K_{max}$ kann hierbei z.B. eine Abweichung einer Achsposition einer Verzahnmaschine während der Zahnradherstellung oder eine Abweichung einer Radialen im Rahmen der Kegelradauslegung sein, d.h. ein die Geometrie eines Zahnrads oder Kegelrads mittelbar definierender Prozessparameter.

Es versteht sich, dass die Abweichungen statt Zähnen des Zahnrads alternativ oder ergänzend den Lücken des Zahnrads zugeordnet werden können. Denn bezüglich der Zahnradherstellung wird in der Literatur teils statt vom Fertigen der Zähne vom Fertigen von Lücken gesprochen, da durch das Herstellen der Lücken die Zähne des Zahnrads gebildet bzw. aus einem Zahnradrohling herausgearbeitet werden.

Es kann vorgesehen sein, dass die durch die Modifikation vorgegebene Variation der Teilung und/oder Topografie über der Gesamtzähnezahl des Zahnrads betrachtet einer Überlagerung von genau drei Sinusfunktionen entspricht.

Gemäß einer Ausgestaltung des Zahnrads ist vorgesehen, dass eine sich durch die der Sollgeometrie überlagerte Modifikation ergebende, über zwei oder mehr Zähne des Zahnrads gemittelte Abweichung von der Sollgeometrie weniger als 30 % einer Gesamtamplitude der

Überlagerung der mindestens zwei harmonischen Funktionen entspricht, insbesondere weniger als 25 % der Gesamtamplitude der Überlagerung der mindestens zwei harmonischen Funktionen entspricht.

Beispielsweise kann vorgesehen sein, dass eine sich durch die der Sollgeometrie überlagerte Modifikation ergebende, über zwei oder mehr Zähne des Zahnrads gemittelte Abweichung von der Sollgeometrie weniger als 25 % einer Gesamtamplitude der Überlagerung von genau drei Sinusfunktionen entspricht.

Gemäß einer Ausgestaltung des Zahnrads ist vorgesehen, dass die Frequenz der jeweiligen harmonischen Funktion, die einer Anzahl von Zyklen der jeweiligen harmonischen Funktion betrachtet über der Gesamtzähnezahl entspricht, kleiner ist als die Gesamtzähnezahl des Zahnrads.

Insbesondere ist die Frequenz einer jeweiligen harmonischen Funktion dabei ungleich 1, die diese Frequenz dem Rundlauffehler anhaftet.

Insbesondere kann die Frequenz der jeweiligen harmonischen Funktion an die für das betreffende Zahnrad üblicherweise gebräuchliche Anzahl zu messender Zähne angepasst sein, wobei insbesondere keine Frequenz verwendet wird, die der Anzahl der zu messenden Zähne entspricht. Werden an einem Zahnrad mit z.B. 13 Zähnen im Rahmen der Qualitätskontrolle üblicherweise 3 oder 4 Zähne über den Umfang verteilt gemessen, so sollten die Frequenzen 1, 3 und 4 nicht als Frequenzen für die jeweiligen überlagerten harmonischen Funktionen verwendet werden. Beispielsweise können für ein solches Zahnrad die Frequenzen 2, 5 und Z-2=11 verwendet werden, soweit z.B. drei überlagerte Sinusfunktionen als überlagerte harmonische Funktionen verwendet werden.

Gemäß einer Ausgestaltung des Zahnrads ist vorgesehen, dass sich die Amplituden der überlagerten harmonischen Funktionen für einen Zahn aufheben und die Modifikation für diesen Zahn des Zahnrads null beträgt. Soweit die Modifikation für diesen Zahn bzw. diese Lücke des Zahnrads null beträgt, kann es sich dabei beispielsweise um einen als solchen gekennzeichneten ersten Zahn bzw. um eine als solche gekennzeichnete erste Lücke des Zahnrads handeln, die innerhalb einer Messmaschine auffindbar ist und die den ersten Zahn bzw. die erste Lücke darstellt, der bzw. die in einem Messablauf zuerst gemessen wird und anhand derer die Nummerierung der weiteren Zähne bzw. Lücken im Uhrzeigersinn oder gegen den Uhrzeigersinn vorgegeben ist.

Es kann vorgesehen sein, dass die Sollgeometrie des Zahnrads Verzahnungsmodifikationen aufweist, wie Rücknahmen, Balligkeiten oder dergleichen. D.h. die Sollgeometrie kann Verzahnungsmodifikationen aufweisen, die für alle Zähne gleichermaßen gelten und definiert sind, während dieser Verzahnungsmodifikationen aufweisenden Sollgeometrie zusätzlich die beanspruchte, überlagerte Modifikation aufgeprägt wird, wobei die Verzahnungsmodifikationen aufweisende Sollgeometrie inklusive dieser überlagerten Modifikation die geräuschoptimierte Sollgeometrie ergibt. D. h. die Sollgeometrie beinhaltete die für jeden Zahn bzw. jede Lücke in gleicher Weise vorgegebene Flankentopografie, die Verzahnungsmodifikationen beinhalten kann, während durch die dieser Sollgeometrie überlagerte Modifikation eine von Zahn zu unterschiedliche Flankentopografie erzeugt wird, um das subjektive Geräuschverhalten des Zahnrads zu verbessern.

Gemäß einer Ausgestaltung des Zahnrads ist vorgesehen, dass das Zahnrad ein Kegelrad ist, insbesondere ein einzelteilend hergestelltes Kegelrad ist. Das Kegelrad kann beispielsweise ein einzelteilend im Wälzverfahren hergestellten Kegelrad sein. Das Kegelrad kann beispielsweise ein einzelteilend im Tauchverfahren hergestelltes Kegelrad sein.

Gemäß einem zweiten Aspekt betrifft die Erfindung ein Verfahren zur Herstellung eines Zahnrads, mit den Verfahrensschritten: Vorgeben einer Sollgeometrie des Zahnrads; Vorgeben einer der Sollgeometrie überlagerten Modifikation in Form einer sich von Zahn zu Zahn ändernden Teilung und/oder Topografie; Herstellen des Zahnrads mittels einer Verzahnmaschine. Das Verfahren zeichnet sich dadurch aus, dass eine durch die Modifikation vorgegebene Variation der Teilung und/oder Topografie über einer Gesamtzähnezahl des Zahnrads betrachtet einer Überlagerung mindestens zweier harmonischer Funktionen entspricht, die sich in einem Parameter oder in mehreren Parametern, wie ihrer Amplitude, Frequenz oder Phasenverschiebung, voneinander unterscheiden.

Es kann vorgesehen sein, dass die Fertigung jeder Lücke bzw. jedes Zahns des Zahnrads mit lückenspezifischen bzw. zahnspezifischen Maschineneinstellungen erfolgt, um die Sollgeometrie mit der überlagerten Modifikation zu fertigen, wobei das Zahnrad insbesondere ein Kegelrad ist, das im Einzelteilverfahren hergestellt wird.

Gemäß einer Ausgestaltung des Verfahrens kann vorgesehen sein, dass das Zahnrad ein Kegelrad ist, das im Einzelteilverfahren hergestellt wird, wobei ein Auslegungsparameter einer virtuellen Verzahnmaschine, wie eine Radiale zur Beeinflussung des Spiralwinkels oder dergleichen, die in Fertigungsparameter der Verzahnmaschine konvertiert werden, lückenspezifisch bzw. zahnspezifisch variiert wird, um die Sollgeometrie mit der überlagerten Modifikation zu fertigen. Das Vorgeben der der Sollgeometrie überlagerten Modifikation kann in der Auslegung des Kegelrads bereits über Auslegungsparameter erfolgen, wie die Radiale oder dergleichen.

Es kann vorgesehen sein, dass ein Fertigungsparameter der Verzahnmaschine, wie eine Bewegung einer Linearachse oder einer Werkstückachse, lückenspezifisch bzw. zahnspezifisch variiert wird, um die Sollgeometrie mit der überlagerten Modifikation zu fertigen. Das Vorgeben der der Sollgeometrie überlagerten Modifikation kann daher über Fertigungsparameter der Verzahnmaschine erfolgen.

Gemäß einem dritten Aspekt betrifft die Erfindung ein Verfahren, mit dem Verfahrensschritten: Bereitstellen eines erfindungsgemäßen Zahnrads und Messen des Zahnrads mittels einer Verzahnungsmessmaschine, wobei Abweichungen des Zahnrads gegenüber der Sollgeometrie ermittelt werden, wobei die der Sollgeometrie überlagerte Modifikation nicht Teil der Sollgeometrie ist.

Das Zahnrad wird daher gegenüber der Sollgeometrie gemessen und nicht gegenüber der geräuschoptimierten Sollgeometrie, die aus der Sollgeometrie plus der der Sollgeometrie überlagerten Modifikation besteht.

Durch die Verwendung der Überlagerung mindestens zweier harmonischer Funktionen, um die Variation vorzugeben, kann erreicht werden, dass eine aufgrund der Modifikation gemessene, gemittelte Abweichung beispielsweise gegenüber der Soll-Geometrie weniger als 25 % der Amplitude bzw. Gesamtamplitude der Überlagerung beträgt - und zwar unabhängig davon, welche Zähne oder Lücken des Zahnrads im Zuge einer Messung von z.B. 3 oder 4 Zähnen des Zahnrads ausgewertet werden. Die Streuung der Messergebnisse, die in Abhängigkeit von der Auswahl der gemessenen Zähne oder Lücken entsteht, ist daher sehr gering, so dass beliebige Zähne oder Lücken gemessen und ausgewertet werden können.

Es kann vorgesehen sein, dass eine Anzahl von Zähnen an dem Zahnrad gemessen werden, die kleiner ist als die Gesamtzähnezahl des Zahnrads, wobei insbesondere weniger als die Hälfte der Zähne des Zahnrads gemessen werden oder insbesondere genau drei oder vier Zähne des Zahnrads gemessen werden, wobei anhand der gemessenen Zähne eine gemittelte Abweichung zur Sollgeometrie bestimmt wird.

Gemäß einer Ausgestaltung des Verfahrens ist vorgesehen, dass anhand der gemittelten Abweichungen Korrekturen für ein Schleifverfahren des Zahnrads bestimmt werden.

Nachfolgend wird die Erfindung anhand einer Ausführungsbeispiele darstellenden Zeichnung näher beschrieben. Es zeigen jeweils schematisch:

Fig. 1     ein erfindungsgemäßes Stirnrad in einer Seitenansicht;
Fig. 2     eine Darstellung einer Variation einer Teilung des Zahnrads aus Fig. 1 über einer Gesamtzähnezahl des Zahnrads betrachtet;
Fig. 3     eine weitere Darstellung der Funktion, die der Variation der Teilung des Zahnrads aus Fig. 2 zugrunde liegt;
Fig. 4     eine Darstellung einer Variation einer Teilung eines weiteren Zahnrads über einer Gesamtzähnezahl des weiteren Zahnrads betrachtet;
Fig. 5     eine weitere Darstellung der Funktion, die der Variation der Teilung des Zahnrads gemäß Fig. 4 zugrunde liegt;
Fig. 6     ein erfindungsgemäßes Kegelrad in einer perspektivischen Ansicht von oben;
Fig. 7     eine Ausschnittvergrößerung des Kegelrads aus Fig. 6;
Fig. 8     einen Ablaufplan eines erfindungsgemäßen Verfahrens;
Fig. 9     eine Verzahnmaschine;
Fig. 10    ein Kegelrad mit einem Stabmesserkopf;
Fig. 11    ein Kegelrad mit einem Stabmesserkopf und einem virtuellen Planrad;
Fig. 12    ein Kegelrad mit einem Werkzeug mit Parametern einer virtuellen Verzahnmaschine;
Fig. 13    das Kegelrad aus Fig. 12 mit dem Werkzeug und mit weiteren Parametern der virtuellen Verzahnmaschine;
Fig. 14    eine Verzahnungsmessmaschine;
Fig. 15    einen Ablaufplan eines weiteren erfindungsgemäßen Verfahrens.

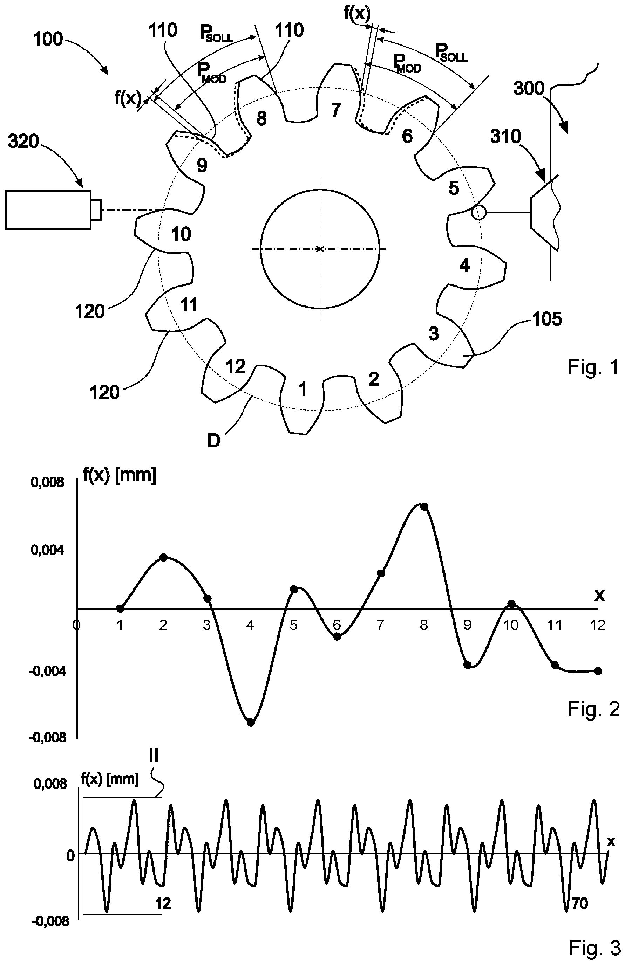

Fig. 1 zeigt ein Zahnrad 100 mit zwölf Zähnen 105, die aufeinanderfolgend gegen den Uhrzeigersinn von 1 bis 12 durchnummeriert sind. Das Zahnrad 100 ist ein Stirnrad. Das Zahnrad hat eine Sollgeometrie, die die Form von Rechtsflanken 110 und Linksflanken 120 sowie eine Sollteilung $P_{SOLL}$ am Teilkreis D vorgibt.

Das Zahnrad 100 hat eine der Sollgeometrie überlagerte Modifikation in Form einer sich von Zahn zu Zahn ändernden Teilung $P_{MOD}$, die vorliegend auch als modifizierte Teilung oder geräuschoptimierte Teilung bezeichnet werden kann.

Die durch die Modifikation vorgegebene Variation der Teilung $P_{MOD}$ entspricht vorliegend über einer Gesamtzähnezahl Z = 12 des Zahnrads 100 betrachtet einer Überlagerung von genau drei Sinusfunktionen (Fig. 2).

Die überlagerten harmonischen Funktionen sind im vorliegenden Beispiel drei Sinusfunktionen, wobei jedem Zahn die Abweichung als Funktionswert $f(x)$ gemäß der folgenden allgemeinen Vorschrift zugeordnet wird

$$f(x) = K_{max} * A_1 * \sin\left(2 * \pi * \left(\phi_1 + \omega_1 \frac{(x-1)}{z}\right)\right) + K_{max} * A_2 * \sin\left(2 * \pi * \left(\phi_2 + \omega_2 \frac{(x-1)}{z}\right)\right) +$$

$$K_{max} * A_3 * \sin\left(2 * \pi * \left(\phi_3 + \omega_3 \frac{(x-1)}{z}\right)\right),$$

wobei für die im vorliegenden Beispiel gemäß Fig. 2 folgende Zahlenwerte verwendet werden

$$f(x) = 0,015 \text{ mm} * 0,4 * \sin\left(2 * \pi * \left(0,11 + 2 * \frac{(x-1)}{12}\right)\right) + 0,015 \text{ mm} * 0,3 * \sin\left(2 * \pi * \right.$$

$$\left. \left(0,66 + 5 * \frac{(x-1)}{12}\right)\right) + 0,015 \text{ mm} * 0,3 * \sin\left(2 * \pi * \left(0 + 11 * \frac{(x-1)}{12}\right)\right),$$

wobei für die erste Sinusfunktion die Amplitude $A_1$ = 0,4, die Frequenz $\omega_1$ = 2 und die Phasenverschiebung $\phi_1$ = 0,11 vorgegeben ist, wobei für die zweite Sinusfunktion die Amplitude $A_2$ = 0,3, die Frequenz $\omega_2$ = 5 und die Phasenverschiebung $\phi_2$ = 0,66 vorgegeben ist und wobei für die dritte Sinusfunktion die Amplitude $A_3$ = 0,3, die Frequenz $\omega_3$ = 11 und die Phasenverschiebung $\phi_3$ = 0 vorgegeben ist. $K_{max}$ entspricht in diesem Beispiel einem Teilungsfehler von maximal 0,015 mm, der mittels der Sinusfunktionen anteilig den Zähnen 105 des Zahnrads 100 überlagert wird.

Hieraus ergeben sich für jeden Zahn 1 bis 12 die folgenden Abweichungen f(x), (siehe Fig. 2):

| Zahn | $\sum\limits_{i=1}^{n} A_i * \sin\left(2*\pi*\left(\phi_i + \omega_i \frac{(x-1)}{Z}\right)\right)$ | $K_{max} * \sum\limits_{i=1}^{n} A_i * \sin\left(2*\pi*\left(\phi_i + \omega_i \frac{(x-1)}{Z}\right)\right)$ |
|---|---|---|
| 1 | 0,002 | 0,00003 mm |
| 2 | 0,235 | 0,00353 mm |
| 3 | 0,046 | 0,00069 mm |
| 4 | -0,522 | -0,00783 mm |
| 5 | 0,088 | 0,00011 mm |
| 6 | -0,127 | -0,00191 mm |
| 7 | 0,161 | 0,00242 mm |
| 8 | 0,47 | 0,00705 mm |
| 9 | -0,26 | -0,00390 mm |
| 10 | 0,022 | 0,00033 mm |
| 11 | -0,261 | -0,00392 mm |
| 12 | -0,288 | -0,00432 mm |

Eine sich durch die der Sollgeometrie überlagerte Modifikation ergebende, über drei oder vier Zähne 105 des Zahnrads 100 gemittelte Abweichung von der Sollgeometrie beträgt weniger als 25 % der Gesamtamplitude der Überlagerung der Sinusfunktionen. Es werden dabei üblicherweise drei oder vier Zähne betrachtet, die einen Abstand von zwei oder drei Zähnen zueinander aufweisen, d.h. über den Umfang des Zahnrads verteilt angeordnet sind.

In Fig. 3 ist die Funktion f(x) für Funktionswerte von x=1 bis x=75 dargestellt worden, um die sich überlagernden harmonischen Sinusfunktionen besser zu veranschaulichen. Die Darstellung der Fig. 2 ist daher ein Ausschnitt II der Fig. 3.

In dem vorgenannten Beispiel ist ein Zahnrad mit gerader Zähnezahl gezeigt. Das beschriebene Vorgehen lässt sich beliebig auf Zahnräder mit ungerader Zähnezahl und höherer Zähnezahl übertragen.

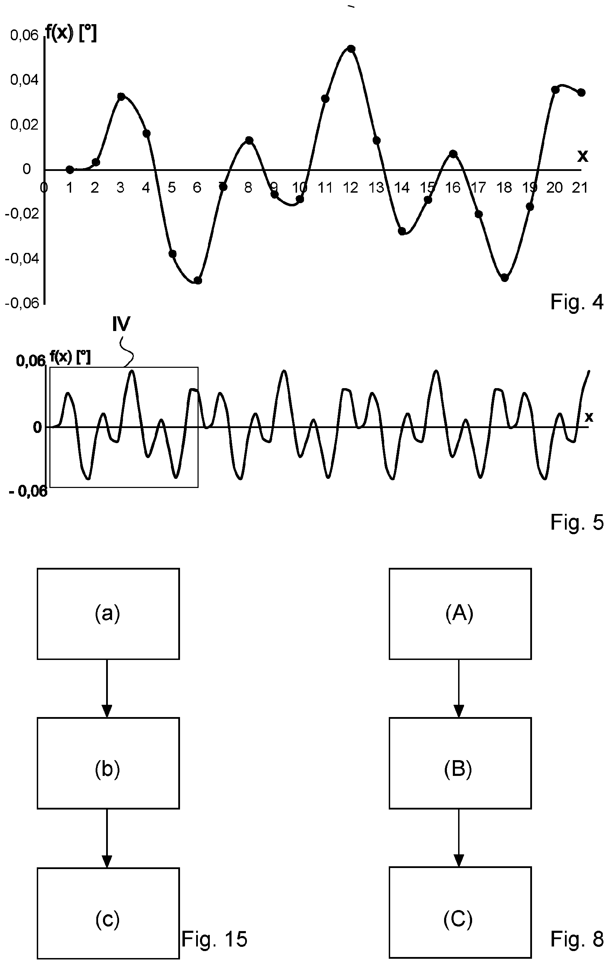

Das Beispiel der Fig. 4 betrifft ein Kegelrad mit 21 Zähnen, wobei jedem Zahn die Abweichung als Funktionswert $f(x)$ gemäß der folgenden allgemeinen Vorschrift zugeordnet wird

$$f(x) = K_{max} * A_1 * \sin\left(2 * \pi * \left(\phi_1 + \omega_1 \frac{(x-1)}{z}\right)\right) + K_{max} * A_2 * \sin\left(2 * \pi * \left(\phi_2 + \omega_2 \frac{(x-1)}{z}\right)\right) +$$

$$K_{max} * A_3 * \sin\left(2 * \pi * \left(\phi_3 + \omega_3 \frac{(x-1)}{z}\right)\right),$$

für die im vorliegenden Beispiel gemäß Fig. 4 folgende Zahlenwerte verwendet werden

$$f(x) = 0{,}1° * 0{,}4 * \sin\left(2 * \pi * \left(0{,}11 + 2 * \frac{(x-1)}{21}\right)\right) + 0{,}1° * 0{,}3 * \sin\left(2 * \pi * \left(0{,}66 + 5 * \right.\right.$$

$$\left.\left. \frac{(x-1)}{21}\right)\right) + 0{,}1° * 0{,}3 * \sin\left(2 * \pi * \left(0 + 19 * \frac{(x-1)}{21}\right)\right),$$

wobei für die erste Sinusfunktion die Amplitude $A_1$ = 0,4, die Frequenz $\omega_1$ = 2 und die Phasenverschiebung $\phi_1$ = 0,11 vorgegeben ist, wobei für die zweite Sinusfunktion die Amplitude $A_2$ = 0,3, die Frequenz $\omega_2$ = 5 und die Phasenverschiebung $\phi_2$ = 0,66 vorgegeben ist und wobei für die dritte Sinusfunktion die Amplitude $A_3$ = 0,3, die Frequenz $\omega_3$ = 19 und die Phasenverschiebung $\phi_3$ = 0 vorgegeben ist. $K_{max}$ entspricht in diesem Beispiel einer Spiralwinkelabweichung eines mittleren Spiralwinkels $\beta_m$ von maximal 0,1°, der mittels der Sinusfunktionen den Zähnen des Zahnrads überlagert wird. Hieraus ergeben sich für jeden Zahn 1 bis 21 die folgenden Abweichungen f(x) in [°], (siehe Fig. 4):

| Zahn | $\sum_{i=1}^{n} A_i * \sin\left(2*\pi*\left(\phi_i + \omega_i \frac{(x-1)}{Z}\right)\right)$ | $K_{max} * \sum_{i=1}^{n} A_i * \sin\left(2*\pi*\left(\phi_i + \omega_i \frac{(x-1)}{Z}\right)\right)$ |
|---|---|---|
| 1 | 0,002 | 0,0002° |
| 2 | 0,036 | 0,0036° |
| 3 | 0,327 | 0,0327° |
| 4 | 0,164 | 0,0164° |
| 5 | -0,376 | -0,0376° |
| 6 | -0,493 | -0,0493° |
| 7 | -0,075 | -0,0075° |
| 8 | 0,131 | 0,0131° |
| 9 | -0,108 | -0,0108° |
| 10 | -0,131 | -0,0131° |
| 11 | 0,318 | 0,0318° |
| 12 | 0,541 | 0,0541° |
| 13 | 0,133 | 0,0133° |
| 14 | -0,273 | -0,0273° |
| 15 | -0,133 | -0,0133° |
| 16 | 0,072 | 0,0072° |
| 17 | -0,196 | -0,0196° |
| 18 | -0,482 | -0,0482° |
| 19 | -0,165 | -0,0165° |
| 20 | 0,360 | 0,0360° |
| 21 | 0,347 | 0,0347° |

In Fig. 5 ist die Funktion f(x) für Funktionswerte von x=1 bis x=75 dargestellt worden, um die sich überlagernden harmonischen Sinusfunktionen besser zu veranschaulichen. Die Darstellung der Fig. 4 ist daher ein Ausschnitt IV der Fig. 4.

Alle Zahlenwerte sind lediglich als Beispiel zur Veranschaulichung der erfindungsgemäßen Vorgehensweise zu verstehen.

Eine sich durch die der Sollgeometrie überlagerte Modifikation ergebende, über drei oder vier Zähne des Zahnrads gemäß dem Beispiel der Fig. 4 gemittelte Abweichung von der Sollgeometrie beträgt weniger als 25 % der Gesamtamplitude der Überlagerung der Sinusfunktionen. Es werden dabei üblicherweise drei oder vier Zähne betrachtet, die einen Abstand von fünf oder sechs Zähnen zueinander aufweisen, d.h. über den Umfang verteilt angeordnet sind.

Für die voranstehenden Beispiele gilt, dass die Frequenz einer jeweiligen harmonischen Funktion, die einer Anzahl von Zyklen der jeweiligen harmonischen Funktion betrachtet über der Gesamtzähnezahl entspricht, kleiner ist als die Gesamtzähnezahl des jeweiligen Zahnrads.

Für die voranstehenden Beispiele gilt, dass sich die Amplituden der überlagerten harmonischen Funktionen für den Zahn 1 des jeweiligen Zahnrads aufheben und die Modifikation für diesen Zahn des Zahnrads im Wesentlichen null beträgt.

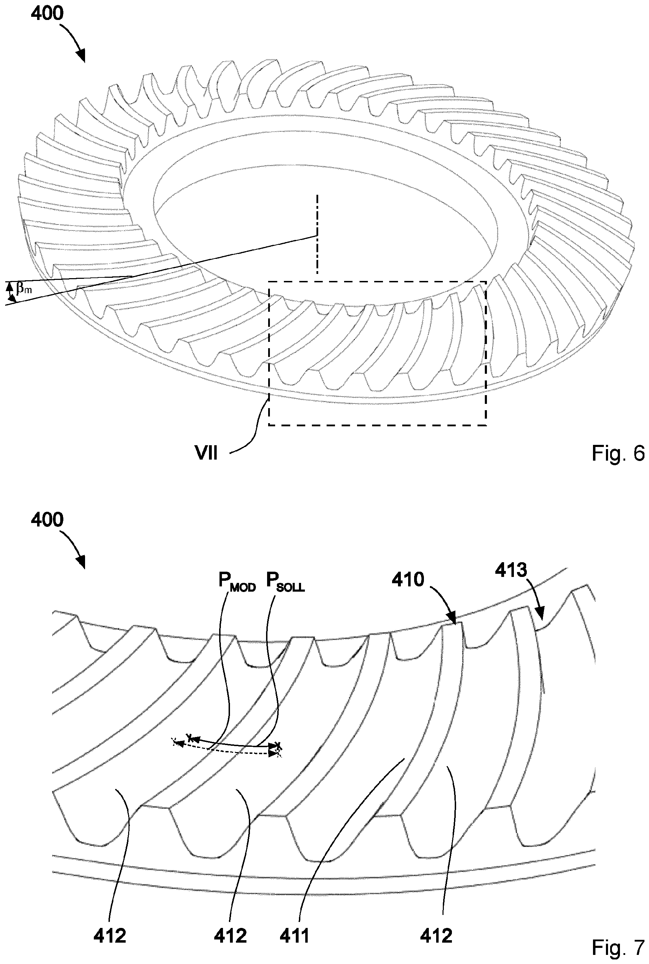

Die voranstehend beschriebene Modifikation kann für ein Kegelrad 400 verwendet werden (Fig. 6). Das Kegelrad 400 hat Zähne 410 und Lücken 413 mit konkaven Flanken 411 und konvexen Flanken 412. Eine gemäß der Sollgeometrie des Kegelrads vorgesehene Teilung $P_{SOLL}$ und eine modifizierte Teilung $P_{MOD}$, die sich aus der geräuschoptimierten Sollgeometrie des Kegelrads ergibt, sind exemplarisch und schematisch für einen Zahn des Kegelrads eingezeichnet.

Die Modifikation kann für das Kegelrad 400 in Form einer sich von Zahn zu Zahn ändernden Teilung und Topografie vorgegeben sein. Insbesondere kann vorgesehen sein, dass eine durch die Modifikation vorgegebene Variation der Teilung und Topografie über der Gesamtzähnezahl des Kegelrads 400 betrachtet einer Überlagerung mindestens zweier harmonischer Funktionen entspricht, die sich in einem Parameter oder in mehreren Parametern, wie ihrer Amplitude, Frequenz oder Phasenverschiebung, voneinander unterscheiden.

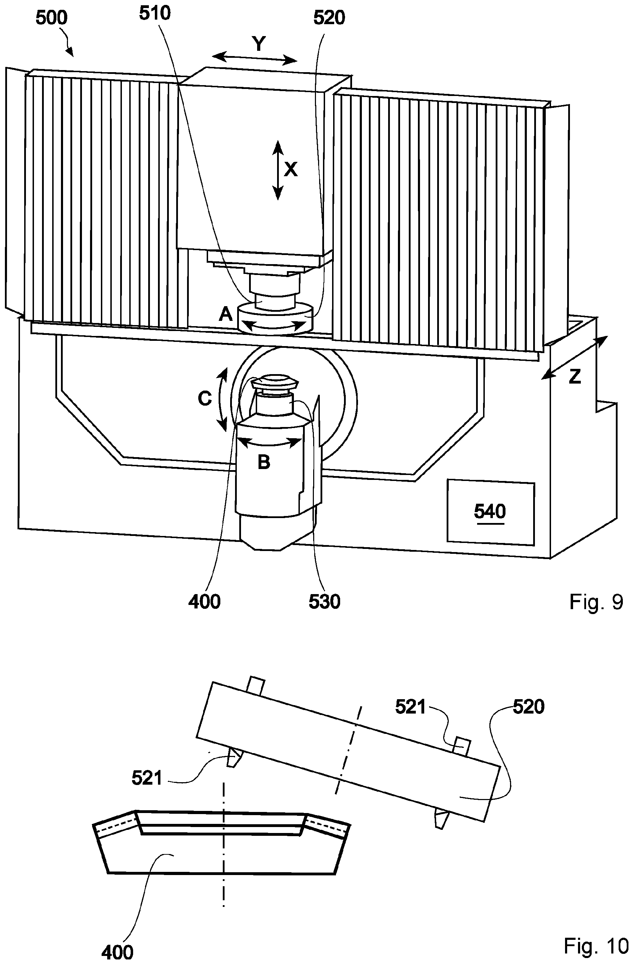

Erfindungsgemäß kann ein Verfahren zur Herstellung eines Zahnrads 100, 400 angegeben werden (Fig. 8), mit den Verfahrensschritten: (A) Vorgeben einer Sollgeometrie des Zahnrads; (B) Vorgeben einer der Sollgeometrie überlagerten Modifikation in Form einer sich von Zahn zu Zahn ändernden Teilung und/oder Topografie, wobei eine durch die Modifikation vorgegebene Variation der Teilung und/oder Topografie über einer Gesamtzähnezahl des Zahnrads betrachtet einer Überlagerung mindestens zweier harmonischer Funktionen entspricht, die sich in einem Parameter oder in mehreren Parametern, wie ihrer Amplitude, Frequenz oder Phasenverschiebung, voneinander unterscheiden.; (C) Herstellen des Zahnrads mittels einer Verzahnmaschine 500 (Fig. 9).

Fig. 9 zeigt exemplarisch eine Verzahnmaschine 500 zur Herstellung von Kegelradverzahnungen. Eine solche Verzahnmaschine 500 hat Bewegungsachsen in Form von drei Linearachsen X, Y, Z, einer Achse A zum Drehantreiben des eines Werkzeugs 520 zur Kegelradherstellung, wie ein Stabmesserkopf oder dergleichen, eine Achse B zum Drehbewegen des Kegelradwerkstücks 400, und eine Schwenkachse C zum Neigen des Werkstücks 400 relativ zum Werkzeug 520. Dabei ist das Werkzeug 520 an einer Werkzeugspindel 510 gehalten und das Werkstück 400 an einer Werkstückspindel 530 gehalten ist.

Fig. 10 zeigt den Stabmesserkopf 520 mit Stabmessern 521 und das Kegelrad 400.

Es kann vorgesehen sein, dass die Fertigung jeder Lücke 413 des Kegelrads 400 mit lückenspezifischen Maschineneinstellungen erfolgt, um die Sollgeometrie mit der überlagerten Modifikation zu fertigen, wobei das Kegelrad 400 im Einzelteilverfahren hergestellt wird. In diesem Fall erhält die Verzahnmaschine 500 für jede Lücke 413 einen vollständigen lückenspezifischen Datensatz, der ggf. lückenspezifische, d.h. sich von Lücke zu Lücke unterscheidende Einstellungen für jede der Maschinenachsen umfasst.

Alternativ kann vorgesehen sein, dass ein Fertigungsparameter der Verzahnmaschine 500, wie eine Bewegung einer der Linearachsen X, Y, Z oder der Werkstückachse B oder der Schwenkachse C lückenspezifisch variiert wird, um die Sollgeometrie mit der überlagerten Modifikation zu fertigen. So kann die Modifikation dem Kegelrad als lückenspezifische Funktion einer einzelnen Maschinenachse aufgeprägt werden, während die weiteren Maschinenachsen für alle Lücken in gleicher Weise bewegt werden.

Es kann vorgesehen sein, dass das Kegelrad 400 im Einzelteilverfahren hergestellt wird, wobei ein Auslegungsparameter einer virtuellen Verzahnmaschine, wie eine Radiale φ zur Beeinflussung des Spiralwinkels oder dergleichen, die in Fertigungsparameter der Verzahnmaschine 500 konvertiert werden, lückenspezifisch variiert wird, um die Sollgeometrie mit der überlagerten Modifikation zu fertigen.

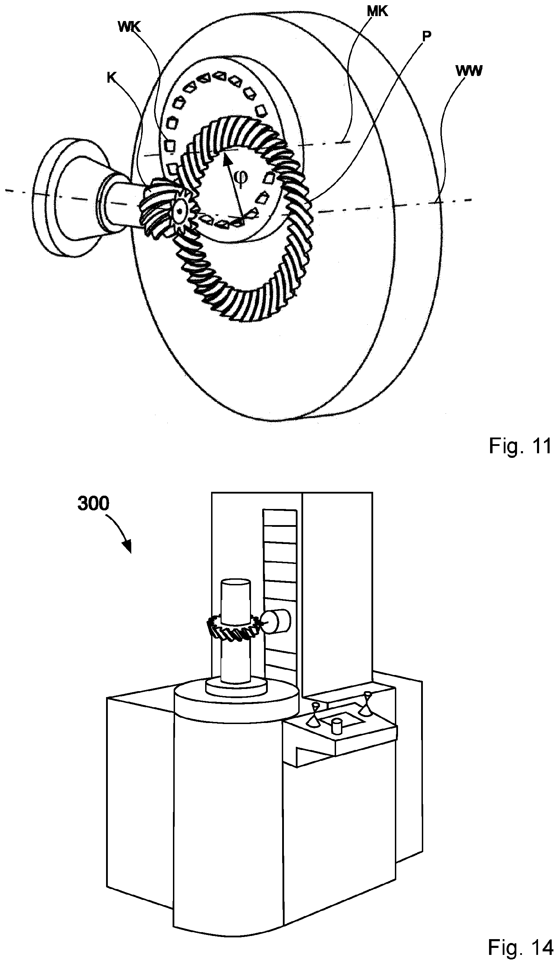

Die Radiale φ bezeichnet in der Kegelradherstellung den Abstand einer Messerkopfachse MK zu einer Wälzwiegenachse WW bzw. Wälzwiege WW, die vorliegend mit einer Planradachse eines virtuellen Planrads P zusammenfällt (Fig. 11). Das Werkzeug WK bildet während der Herstellung eines Kegelrads K einen Zahn des virtuellen Planrads P ab, und wird hierzu um die Wälzwiege WW geschwenkt.

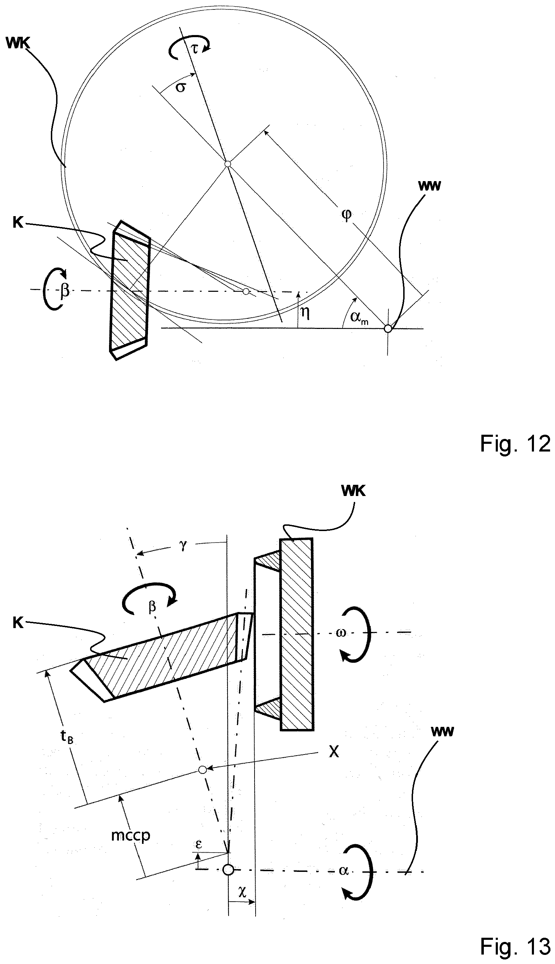

Die Figuren 12 und 13 zeigen Auslegungsparamater einer virtuellen Verzahnmaschine, die zur Beschreibung der Bewegungen zwischen dem Kegelradwerkstück K und dem Werkzeug WK dienen. Fig. 12 zeigt dabei eine weitere schematische Darstellung des Kegelrads K, mit dem Werkzeug WK, der Wälzwiegenachse WW und der Radialen φ. Weiter sind ein Werkraddrehwinkel β, ein Swivelwinkel σ, ein Tiltwinkel τ, ein Achsversatz η und ein mittlerer Wiegenwinkel α_m gezeigt.

Die Darstellung gemäß Fig. 13 zeigt schematisch das Kegelrad K, das Werkzeug WK, die Wälzwiegenachse WW, einen Wiegenwinkel α, den Werkraddrehwinkel β, einen Grundwinkel y, eine Horizontale ε, eine Tiefenposition χ, ein Einbaumaß $t_B$, einen Kreuzungspunkt X und einen Abstand mccp einer Maschinenmitte zum Kreuzungspunkt.

Anhand der vorgenannten Auslegungsparameter der virtuellen Verzahnmaschine können die Relativbewegungen zwischen dem Werkzeug und dem Werkstück maschinenunabhängig beschrieben werden. Eine fertige, anhand der virtuellen Verzahnmaschine durchgeführte Auslegung kann dann maschinenspezifisch in Achsbewegungen von Maschinenachsen einer Verzahnmaschine konvertiert werden, wie z.B. der Verzahnmaschine 500.

Die der Sollgeometrie überlagerte Modifikation in Form einer sich von Zahn zu Zahn ändernden Teilung und/oder Topografie kann bereits während der Auslegung anhand der virtuellen Verzahnmaschine berücksichtigt werden, und durch einen oder mehrere der vorgenannten Parameter der virtuellen Verzahnmaschine abgebildet werden. Die der Sollgeometrie überlagerte Modifikation in Form einer sich von Zahn zu Zahn ändernden Teilung und/oder Topografie ist in diesem Fall bereits Teil der für die Maschinenachsen konvertierten Maschinendaten.

Erfindungsgemäß wird weiter ein Verfahren angegeben (Fig. 15), mit den Verfahrensschritten: (a) Bereitstellen eines erfindungsgemäßen Zahnrads 100, 400 und (b) Messen des Zahnrads 100, 400 mittels einer Verzahnungsmessmaschine 300 (Fig. 14), wobei Abweichungen des Zahnrads 100, 400 gegenüber der Sollgeometrie ermittelt werden, wobei die der Sollgeometrie überlagerte Modifikation nicht Teil der Sollgeometrie ist.

Es wird eine Anzahl von Zähnen an dem Zahnrad 100, 400 gemessen, die kleiner ist, als die Gesamtzähnezahl des Zahnrads 100, 400, wobei insbesondere weniger als die Hälfte der Zähne des Zahnrads 100, 400 gemessen werden und vorliegend genau drei oder vier Zähne des Zahnrads 100, 400 über den Umfang verteilt gemessen werden. Anhand der gemessenen Zähne wird eine gemittelte Abweichung zur Sollgeometrie bestimmt.

In einem Schritt (c) werden anhand der gemittelten Abweichungen Korrekturen für ein Schleifverfahren des Zahnrads 100, 400 bestimmt.

Die Verzahnungsmessmaschine 300 kann einen taktilen Sensor 310 und/oder einen optischen Sensor 320 zur Verzahnungsmessung aufweisen.

**Patentansprüche**

1. Zahnrad,

   - wobei das Zahnrad (100, 400) eine Sollgeometrie aufweist,
   - wobei das Zahnrad (100, 400) eine der Sollgeometrie überlagerte Modifikation in Form einer sich von Zahn (105, 410) zu Zahn (105, 410) ändernden Teilung und/oder Topografie aufweist,
   **dadurch gekennzeichnet, dass**
   - eine durch die Modifikation vorgegebene Variation der Teilung und/oder Topografie über einer Gesamtzähnezahl des Zahnrads (105, 410) betrachtet einer Überlagerung mindestens zweier harmonischer Funktionen entspricht, die sich in einem Parameter oder in mehreren Parametern, wie ihrer Amplitude, Frequenz oder Phasenverschiebung, voneinander unterscheiden.

2. Zahnrad nach Anspruch 1,
   **dadurch gekennzeichnet, dass**
   die Modifikation vorgegeben ist, in dem jedem Zahn eine Abweichung als Funktionswert der überlagerten harmonischen Funktion zugeordnet ist.

3. Zahnrad nach Anspruch 2,
   **dadurch gekennzeichnet, dass**

   - die überlagerten harmonischen Funktionen Sinusfunktionen sind, wobei jedem Zahn die Abweichung als Funktionswert $f(x)$ gemäß der folgenden Vorschrift zugeordnet wird:

$$f(x) = K_{max} * \sum_{i=1}^{n} A_i * \sin\left(2 * \pi * \left(\phi_i + \omega_i \frac{(x-1)}{z}\right)\right),$$

   - wobei $K_{max}$ einer maximalen Abweichung eines Verzahnungsparameters oder eines Prozessparameters entspricht,

- wobei "i" einem Laufindex entspricht,
- wobei "n" einer Anzahl der vorgegebenen überlagerten Sinusfunktionen entspricht,
- wobei die Variable "Z" der Gesamtzähnezahl des Zahnrads entspricht,
- wobei die Variable "$A_i$" einer vorgegebenen Amplitude einer jeweiligen "i"-ten Sinusfunktion entspricht,
- wobei die Variable "$\phi_i$" einer vorgegebenen Phasenverschiebung einer jeweiligen "i"-ten Sinusfunktion entspricht,
- wobei die Variable "$\omega_i$" einer vorgegebenen Frequenz einer jeweiligen "i"-ten Sinusfunktion entspricht und
- wobei die Variable "x" eine natürliche Zahl mit x = 1 bis x = Z ist, wobei die Variable "x" einer Nummer eines betreffenden Zahns aufsteigend von 1 bis Z entspricht und wobei die Zähne im Uhrzeigersinn oder gegen den Uhrzeigersinn aufeinanderfolgend durchnummeriert sind.

4. Zahnrad einem der voranstehenden Ansprüche,
**dadurch gekennzeichnet, dass**
die durch die Modifikation vorgegebene Variation der Teilung und/oder Topografie über der Gesamtzähnezahl des Zahnrads (100, 400) betrachtet einer Überlagerung von genau drei Sinusfunktionen entspricht.

5. Zahnrad nach einem der voranstehenden Ansprüche,
**dadurch gekennzeichnet, dass**
eine sich durch die der Sollgeometrie überlagerte Modifikation ergebende, über zwei oder mehr Zähne (105, 410) des Zahnrads (100, 400) gemittelte Abweichung von der Sollgeometrie weniger als 30 % einer Gesamtamplitude der Überlagerung der mindestens zwei harmonischen Funktionen entspricht, insbesondere weniger als 25 % der Gesamtamplitude der Überlagerung der mindestens zwei harmonischen Funktionen entspricht.

6. Zahnrad einem der voranstehenden Ansprüche,
**dadurch gekennzeichnet, dass**
die Frequenz der jeweiligen harmonischen Funktion, die einer Anzahl von Zyklen der jeweiligen harmonischen Funktion betrachtet über der Gesamtzähnezahl entspricht, kleiner ist als die Gesamtzähnezahl des Zahnrads (100, 400).

7. Zahnrad nach einem der voranstehenden Ansprüche,
**dadurch gekennzeichnet, dass**
sich die Amplituden der überlagerten harmonischen Funktionen für mindestens einen Zahn (105, 410) des Zahnrads (100, 400) oder für genau einen Zahn (105, 410) des Zahnrads (100, 400) aufheben und die Modifikation für diesen Zahn (105, 410) des Zahnrads (100, 400) null beträgt.

8. Zahnrad nach einem der voranstehenden Ansprüche,

**dadurch gekennzeichnet, dass**
die Sollgeometrie Verzahnungsmodifikationen aufweist, wie Rücknahmen, Balligkeiten oder dergleichen und/oder
das Zahnrad ein Kegelrad (400) ist, insbesondere ein einzelteilend hergestelltes Kegelrad (400) ist.

9. Verfahren zur Herstellung eines Zahnrads, mit den Verfahrensschritten:

- Vorgeben einer Sollgeometrie des Zahnrads (100, 400);
- Vorgeben einer der Sollgeometrie überlagerten Modifikation in Form einer sich von Zahn zu Zahn (105, 410) ändernden Teilung und/oder Topografie;
- Herstellen des Zahnrads (100, 400) mittels einer Verzahnmaschine (500);
**dadurch gekennzeichnet, dass**
- eine durch die Modifikation vorgegebene Variation der Teilung und/oder Topografie über einer Gesamtzähnezahl des Zahnrads (100, 400) betrachtet einer Überlagerung mindestens zweier harmonischer Funktionen entspricht, die sich in einem Parameter oder in mehreren Parametern, wie ihrer Amplitude, Frequenz oder Phasenverschiebung, voneinander unterscheiden.

10. Verfahren nach Anspruch 9,
**dadurch gekennzeichnet,**

- **dass** die Fertigung jeder Lücke des Zahnrads (100, 400) mit lückenspezifischen Maschineneinstellungen erfolgt, um die Sollgeometrie mit der überlagerten Modifikation zu fertigen, wobei das Zahnrad insbesondere ein Kegelrad (400) ist, das im Einzelteilverfahren hergestellt wird;

oder

- **dass** das Zahnrad ein Kegelrad (400) ist, das im Einzelteilverfahren hergestellt wird, wobei ein Auslegungsparameter einer virtuellen Verzahnmaschine, wie eine Radiale zur Beeinflussung des Spiralwinkels oder dergleichen, die in Fertigungsparameter der Verzahnmaschine (500) konvertiert werden, lückenspezifisch variiert wird, um die Sollgeometrie mit der überlagerten Modifikation zu fertigen;

oder

- ein Fertigungsparameter der Verzahnmaschine (500), wie eine Bewegung einer Linearachse oder einer Werkstückachse, lückenspezifisch variiert wird, um die Sollgeometrie mit der überlagerten Modifikation zu fertigen.

**11.** Verfahren nach einem der Ansprüche 9 oder 10,
**dadurch gekennzeichnet, dass**

- die Modifikation vorgegeben ist, in dem jedem Zahn eine Abweichung als Funktionswert der überlagerten harmonischen Funktion zugeordnet ist, insbesondere, dass
- die überlagerten harmonischen Funktionen Sinusfunktionen sind, wobei jedem Zahn die Abweichung als Funktionswert $f(x)$ gemäß der folgenden Vorschrift zugeordnet wird:

$$f(x) = K_{max} * \sum_{i=1}^{n} A_i * \sin\left(2 * \pi * \left(\phi_i + \omega_i \frac{(x-1)}{z}\right)\right),$$

- wobei $K_{max}$ einer maximalen Abweichung eines Verzahnungsparameters oder eines Prozessparameters entspricht,
- wobei "i" einem Laufindex entspricht,
- wobei "n" einer Anzahl der vorgegebenen überlagerten Sinusfunktionen entspricht,
- wobei die Variable "Z" der Gesamtzähnezahl des Zahnrads entspricht,
- wobei die Variable "$A_i$" einer vorgegebenen Amplitude einer jeweiligen "i"-ten Sinusfunktion entspricht,
- wobei die Variable "$\phi_i$" einer vorgegebenen Phasenverschiebung einer jeweiligen "i"-ten Sinusfunktion entspricht,
- wobei die Variable "$\omega_i$" einer vorgegebenen Frequenz einer jeweiligen "i"-ten Sinusfunktion entspricht und
- wobei die Variable "x" eine natürliche Zahl mit x = 1 bis x = Z ist, wobei die Variable "x" einer Nummer eines betreffenden Zahns aufsteigend von 1 bis Z entspricht und wobei die Zähne im Uhrzeigersinn oder gegen den Uhrzeigersinn aufeinanderfolgend durchnummeriert sind.

**12.** Verfahren nach einem der Ansprüche 9-11,
**dadurch gekennzeichnet, dass**
die durch die Modifikation vorgegebene Variation der Teilung und/oder Topografie über der Gesamtzähnezahl des Zahnrads (100, 400) betrachtet einer Überlagerung von genau drei Sinusfunktionen entspricht.

**13.** Verfahren, mit den Verfahrensschritten:

- Bereitstellen eines Zahnrads (100, 400), wobei das Zahnrads (100, 400) gemäß einem der voranstehenden Ansprüche 1 - 8 ausgebildet ist,
- Messen des Zahnrads (100, 400) mittels einer Verzahnungsmessmaschine (300), wobei Abweichungen des Zahnrads (100, 400) gegenüber der Sollgeometrie ermittelt werden, wobei die der Sollgeometrie überlagerte Modifikation nicht Teil der Sollgeometrie ist.

**14.** Verfahren nach Anspruch 13,
**dadurch gekennzeichnet, dass**

- eine Anzahl von Zähnen an dem Zahnrad (100, 400) gemessen werden, die kleiner ist, als die Gesamtzähnezahl des Zahnrads, wobei insbesondere weniger als die Hälfte der Zähne (105, 410) des Zahnrads (100, 400) gemessen werden oder insbesondere genau drei oder vier Zähne (105, 410) des Zahnrads (100, 400) gemessen werden,

- wobei anhand der gemessenen Zähne gemittelte Abweichung zur Sollgeometrie bestimmt wird.

15. Verfahren nach Anspruch 14,
**dadurch gekennzeichnet, dass**
anhand der gemittelten Abweichungen Korrekturen für ein Schleifverfahren des Zahnrads (100, 400) bestimmt werden.

Fig. 1

Fig. 2

Fig. 3

Fig. 4

Fig. 5

Fig. 15

Fig. 8

400

VII

$\beta_m$

Fig. 6

400

$P_{MOD}$  $P_{SOLL}$  410  413

412  412  411  412

Fig. 7

Fig. 9

Fig. 10

Fig. 11

Fig. 14

Fig. 12

Fig. 13

Europäisches
Patentamt

European
Patent Office

Office européen
des brevets

## EUROPÄISCHER RECHERCHENBERICHT

**Nummer der Anmeldung**

**EP 22 17 5584**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | KASTEN MARCEL ET AL: "Reducing the Tonality of Gear Noise by Application of Topography Scattering for Ground Bevel Gears", GEARSOLUTIONS, 15. Mai 2021 (2021-05-15), XP055947373, Gefunden im Internet: URL:https://gearsolutions.com/features/red uction-of-the-tonality-of-gear-noise-by-ap plication-of-topography-scattering-for-gro und-bevel-gears/> * das ganze Dokument * ----- | 1-15 | INV. F16H55/08 F16H55/14 F16H55/18 B23F17/00 |
| A | EP 3 600 744 A1 (KLINGELNBERG AG [CH]) 5. Februar 2020 (2020-02-05) * Abbildungen 1-5 * ----- | 1-15 | |

RECHERCHIERTE
SACHGEBIETE (IPC)

F16H
B24C
B23F

Der vorliegende Recherchenbericht wurde für alle Patentansprüche erstellt

| Recherchenort | Abschlußdatum der Recherche | Prüfer |
|---|---|---|
| München | 11. Oktober 2022 | Szodfridt, Tamas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 17 5584

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2022

| Im Recherchenbericht angeführtes Patentdokument | Datum der Veröffentlichung | Mitglied(er) der Patentfamilie | Datum der Veröffentlichung |
|---|---|---|---|
| EP 3600744 A1 | 05-02-2020 | EP 3600744 A1<br>US 2020332877 A1<br>WO 2018177563 A1 | 05-02-2020<br>22-10-2020<br>04-10-2018 |

EPO FORM P0461

Für nähere Einzelheiten zu diesem Anhang : siehe Amtsblatt des Europäischen Patentamts, Nr.12/82